**Europäisches Patentamt**

**European Patent Office**

**Office européen des brevets**

(19)

(11) Veröffentlichungsnummer: **0 258 835**
**A2**

(12) # EUROPÄISCHE PATENTANMELDUNG

(21) Anmeldenummer: **87112534.0**

(22) Anmeldetag: **28.08.87**

(51) Int. Cl.⁴: **G01M 3/16**

(30) Priorität: **30.08.86 DE 3629892**

(43) Veröffentlichungstag der Anmeldung:
**09.03.88 Patentblatt 88/10**

(84) Benannte Vertragsstaaten:
**AT BE CH DE ES FR GB IT LI NL SE**

(71) Anmelder: **Licentia Patent-Verwaltungs-GmbH**
**Theodor-Stern-Kai 1**
**D-6000 Frankfurt/Main 70(DE)**

(72) Erfinder: **Froehling, Werner,Dr. Dipl.Phys.**
**St.-Gallener Str. 28**
**D 7900 Ulm(DE)**
Erfinder: **Nestler, Johannes,Prof. Dr. Ing.**
**Cranachstr. 19**
**D 100 Berlin 41(DE)**
Erfinder: **Pietrulla, Wolfgang, Prof. Dr. Ing.**
**Kastanienallee 15**
**D - 1000 Berlin 19(DE)**

(74) Vertreter: **Schulze, Harald Rudolf, Dipl.-Ing. et**
**al**
**Licentia Patent-Verwaltungs-GmbH**
**Theodor-Stern-Kai 1**
**D-6000 Frankfurt/Main 70(DE)**

(54) **Undurchlässige Trennschicht.**

(57) Die Erfindung betrifft eine undurchlässige Trennschicht zwischen zwei Bereichen mit voneinander
getrennt zu haltenden Stoffen. Sie besteht darin, daß
mindestens eine Zwischenschicht vorgesehen ist, in
der eine Substanz eingeschlossen ist, die bei Kontakt mit einem der beiden Stoffe Energie freisetzt,
und daß bei Verwendung zweier Zwischenschichten,
die auf jeweils einen der getrennt zu haltenden Stoffe mit Energiefreigabe ansprechen, die Zwischenschichten chemisch und/oder physikalisch voneinander getrennt sind, und daß bei räumlich ausgedehnten Bereichen die Zwischenschichten aus mehreren
Zellen bestehen, und daß die freigesetzte Energie
zur Aktivierung von Melde-oder Sicherungseinrichtungen verwendet wird, und daß die freigesetzte
Energie vorzugsweise elektrische Energie ist.

Fig. 6

## Undurchlässige Trennschicht

Die Erfindung bezieht sich allgemein auf eine undurchlässige Trennschicht nach dem Oberbegriff des Patentanspruches 1. Typische Beispiele, in denen solchen Trennschichten angewandet werden und bei denen mindestens einer der beiden Bereiche Wasser oder andere Flüssigkeiten enthält, sind:

Trink-und Abwasserleitungen
Zentralheizungen
Wasserkühlungssysteme
Wasserzu-und ableitungen für Waschmaschinen und Geschirrspüler
Rohrleitungen für den Flüssigkeitstransport in industriellen Anlagen
Unterwasserpipelines für Erdöl oder Erdgas
Unterwassertelefonkabel oder Glasfiberkabel
Unterwassertunnel
Staumauern und -wälle
Auftriebskörper und Schwimmkörper
Fässer und andere Behälter

Auch im Reaktorbau sind undurchlässige Trennschichten erforderlich. Die getrennt zu haltenden Stoffe sind nicht auf Flüssigkeiten beschränkt.

Trennschichten dieser Art bestehen üblicherweise aus einer festen Materieschicht, die die beiden Bereiche voneinander trennt und die im unbeschädigten Zustand für die Stoffe aus den beiden Bereichen undurchlässig ist.

Im einfachsten Fall handelt es sich dabei um eine homogene Schicht eines Materials, das für die betreffende Anwendung geeignet ist. Typische Beispiele sind Metalle, Keramik, Glas, Kunststoff, Stein, Beton, Holz, Erde, Ton, Gummi usw. Bei vielen Anwendungen besteht die feste Materieschicht aus einer Kombination von Schichten aus gleichem oder unterschiedlichem Material. Typische Beispiele sind glasfaserverstärkte Kunststoffe, kunststoff-, teer-oder farbbeschichtete Metalle, metallisierte Keramik, glasvergossene Metalle, Stahlbeton usw.

Trennschichten können durch physikalische und/oder chemische Prozesse wie zum Beispiel Druck, Zug, Stoß, Reibung, Erwärmung, Abkühlung, radioaktive Bestrahlung, Korrosion usw. derart beschädigt werden, daß ihre Trennwirkung aufgehoben wird und Stoffe aus dem einen Bereich in den anderen Bereich eindringen und umgekehrt.

Trennschichten sind in großer Zahl allgemein bekannt und brauchen insbesondere für die aufgezählten Beispiele nicht näher beschrieben zu werden.

Bei den Trennschichten der bekannten Art werden solche Beschädigungen oft erst entdeckt, wenn Folgeschäden bereits in einem größeren Umfang entstanden sind. Bei räumlich ausgedehnten und/oder schwer zugänglichen Trennschichten, wie zum Beispiel Unterwasserpipelines oder unterirdische Abwasserleitungen kommt erschwerend hinzu, daß die beschädigten Stellen der Trennschicht im allgemeinen nur sehr schwer ausfindig gemacht werden können bzw. nicht entdeckt werden.

Häufig werden hierdurch große Folgeschäden verursacht. Typische Beispiele von Beschädigungen und ihren Folgen sind:
-Defekte Rohrleitungen für industrielle Abwässer: Verunreinigung des Bodens und des Grundwassers
-Geplatzte Wasserschläuche von Waschmaschinen: beschädigte Wohnungseinrichtungen
-Defekte Unterwasserpipelines für Erdöls schwere Schäden an der Meeresumwelt
-Leckgeschlagene Auftriebskörper von Offshore-Bohrinseln: Kentern der Bohrinseln
-Brüchige Staumauern oder Unterwassertunnel: Überflutungen mit katastrophalen Folgen.

In sicherheitsempfindlichen Bereichen müssen daher aufwendige externe Schutz-und Sicherheitseinrichtungen installiert werden bzw. kostenintensive Wartungsarbeiten und Inspektionen durchgeführt werden, um das erforderliche Maß an Sicherheit und Zuverlässigkeit zu gewährleisten.

Um eine Beschädigung einer undurchlässigen Trennschicht zu melden, werden zum Beispiel Sensoren benutzt, deren Anwendung jedoch sehr aufwendig ist. Weiterhin ist es bekannt, zur Speicherung elektrischer Energie über einen längeren Zeitraum separate aktivierbare galvanische Zellen zu verwenden. Hierzu zählen Füllelemente, thermisch aktivierbare Zellen, gasaktivierbare Zellen, mechanisch aktivierbare Zellen usw. (K.J. Euler:" Elektrochemische Sonderzellen ", ETZ-B 18 (1966) Heft 23, Seite 874 bis 881 und DE-PS-26 12 712).

Die Aufgabe der Erfindung besteht daher darin, eine einfache Trennschicht zu schaffen, die ein Höchstmaß an Sicherheit und Zuverlässigkeit aufweist, indem sie bei einer Beschädigung selbsttätig eine Schutz-und Sicherheitseinrichtung aktiviert, die die Beschädigung anzeigt bzw. Maßnahmen zur Verhütung oder Begrenzung von Folgeschäden ermöglicht, bevor Folgeschäden in einem größeren Umfang auftreten.

Die Aufgabe wird nach der Erfindung durch die in den Patentansprüchen angegebenen Maßnahmen gelöst.

Der Grundgedanke der Erfindung besteht darin, Trennschichten der bekannten Art mit einer zusätzlichen Zwischenschicht zu versehen, in der Energie für den Betrieb einer Schutz-und Sicherheitseinrichtung gespeichert ist, wobei die Energie durch Stoffe aus mindestens einem der beiden Bereiche freigesetzt werden kann, so daß bei einer Beschädigung die Schutz-und Sicherheitseinrichtung automatisch aktiviert wird. Um die Energie zeitlich unbegrenzt speichern zu können, muß die Zwischenschicht im unbeschädigten Zustand der Trennschicht frei von den aktivierenden Stoffen sein.

Sind nur die Stoffe aus einem der beiden zu trennenden Bereiche in der Lage, bei einer Beschädigung der Trennschicht die gespeicherte Energie freizusetzen, kann die Trennschicht mit einer zweiten Zwischenschicht versehen werden, die von der ersten Zwischenschicht getrennt ist und in der Energie gespeichert ist, die nur durch Stoffe aus dem anderen Bereich freigesetzt werden kann.

Räumlich ausgedehnte Trennschichten werden zweckmäßigerweise mit mehreren voneinander getrennten "Zwischenschichtzellen" ausgestattet, damit beschädigte Stellen der Trennschichten leichter ausfindig gemacht werden können.

Im folgenden wird die Erfindung anhand von Zeichnungen an Ausführungsbeispielen näher erläutert.

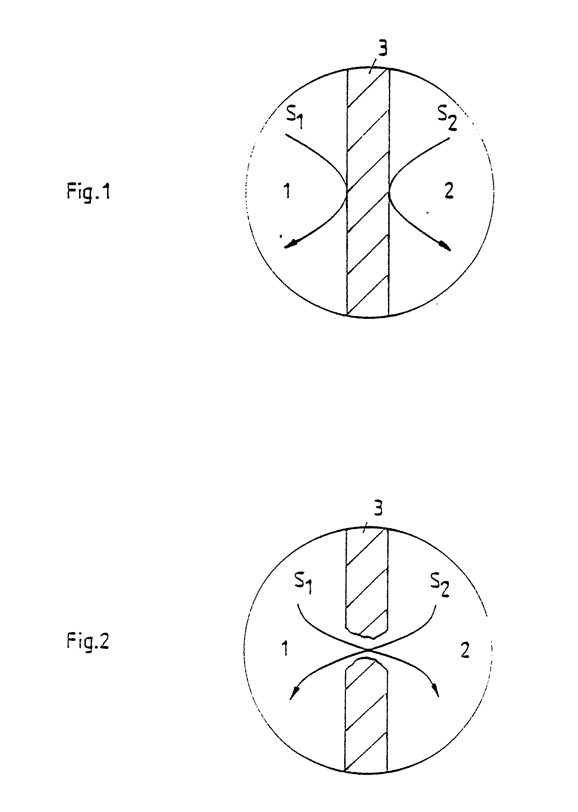

Liste der Bezugszeichen in den Figuren 1 bis 35:

1, 2 Bereiche, die durch eine Trennschicht zu trennen sind

3, 4 Trennschichten aus fester Materie

31-34 zusätzliche Trennschichten aus fester Materie

5 Zwischenschicht mit Energiespeicher

51-57 getrennte Zwischenschichten mit je einem Energiespeicher

58 galvanisches Füllelement

6 allgemeine Wirkverbindung zwischen einer Substanz, die einen Energiespeicher darstellt, und einer Schutz-und Sicherheitseinrichtung

61-66 allgemeine Wirkverbindung wie vor

61-62 elektrisch leitende Verbindungen

7 Schutz-und Sicherheitsvorrichtungen allgemein

71 Ansteuerung eines Aktors einer Schutz-und Sicherheitseinrichtung

72 Wirkverbindung zwischen Ansteuerung eines Aktors und Aktor einer Schutz-und Sicherheitseinrichtung

73 Aktor einer Schutz-und Sicherheitseinrichtung

74, 75 elektromechanischer Schalter

8, 82, 85 Wirkverbindung, Wirkraum für die Ausgangssignale eines Aktors einer Schutz-und Sicherheitseinrichtung

91 zusätzliche unabhängige Stromversorgung einer Schutz-und Sicherheitseinrichtung

92 zusätzlicher Aktor einer Schutz-und Sicherheitseinrichtung

100 Wirkverbindung, Wirkraum für die Ausgangssignale des zusätzlichen Aktors einer Schutz-und Sicherheitseinrichtung

$S_i$ (i = 1, 2) Stoffe aus den Bereichen 1 und 2

$E_i$ (i = 5, 51, 52, 55) freigesetzte Energie, die in der Zwischenschicht gespeichert war

$U_i$ (i = 5, 51, 52, 55, 9) Spannung

$U_S$, $U_S'$ Spannungs-Schwellenwerte

$I_5$ Strom

$P_5$ elektrische Leistung

$\phi_7$ Strahlungsleistung einer Glühlampe

$\phi_{S1}$ Fluß der Substanz $S_1$ im Bereich 1

$X_{71}$ Steuersignal für den Aktor der Schutz-und Sicherheitseinrichtung

$Y_i$ (i = 7, 72, 73, 75, 9) Ausgangssignale der Aktoren der Schutz-und Sicherheitseinrichtung

$t_0$ Zeitpunkt der Beschädigung der Trennschicht

$t_i$ (i = 1, 10, 11) Zeitpunkte der Aktivierung der Schutz-und Sicherheitseinrichtung

$t_2$ Zeitpunkt der Desaktivierung der Schutz-und Sicherheitseinrichtung

Die Figuren 1 bis 5 zeigen den prinzipiellen Aufbau (Ausschnitt von einfachen Trennschichten der bekannten Art im Querschnitt und erläutern die prinzipielle Funktionsweise der Trennschicht.

Eine homogene Materieschicht 3 in Fig. 1 trennt die beiden Bereiche 1 und 2 und ist im unbeschädigten Zustand für getrennt zu haltende Stoffe $S_1$ und $S_2$ undurchlässig. Wird die Trennschicht (z.B. ein Kupfer-oder Stahlrohr) beschädigt, dringt der Stoff $S_1$ in den Bereich 2 und umgekehrt der Stoff $S_2$ in den Bereich 1 (Figur 2).

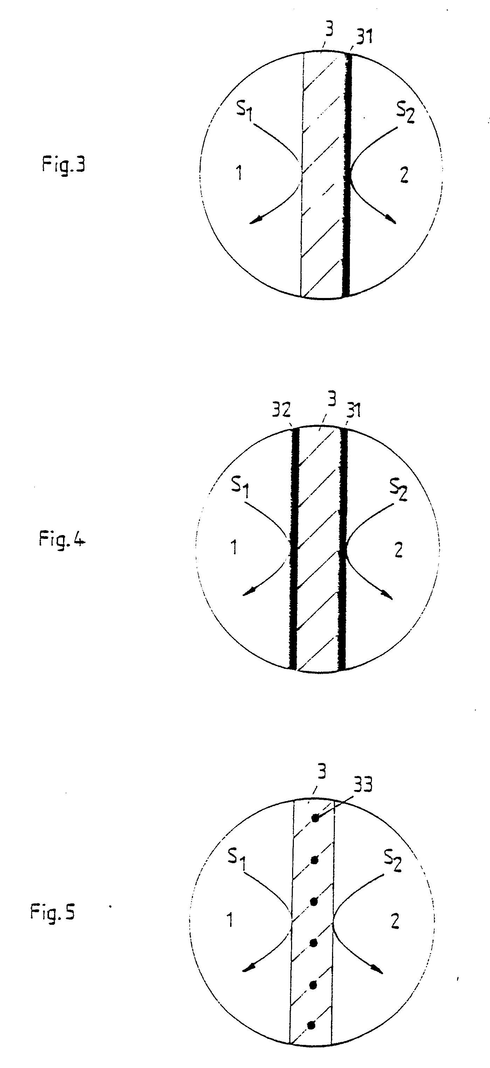

In Fig. 3 trennt eine zusätzliche Materieschicht 31 (z.B. eine Teer-oder Farbschicht) die Materieschicht 3 vom Bereich 2, in Fig. 4 eine weitere Schicht 32 vom Bereich 1 (um z.B. das Stahlrohr vor Korrosion zu schützen). In Fig. 5 enthält die Materieschicht 3 eine zusätzliche Schicht 33 zur Erhöhung der Zug-und Druckfestigkeit der Trennschicht (z.B. ein faserverstärkter Kunststoffschlauch oder eine Wand aus Stahlbeton).

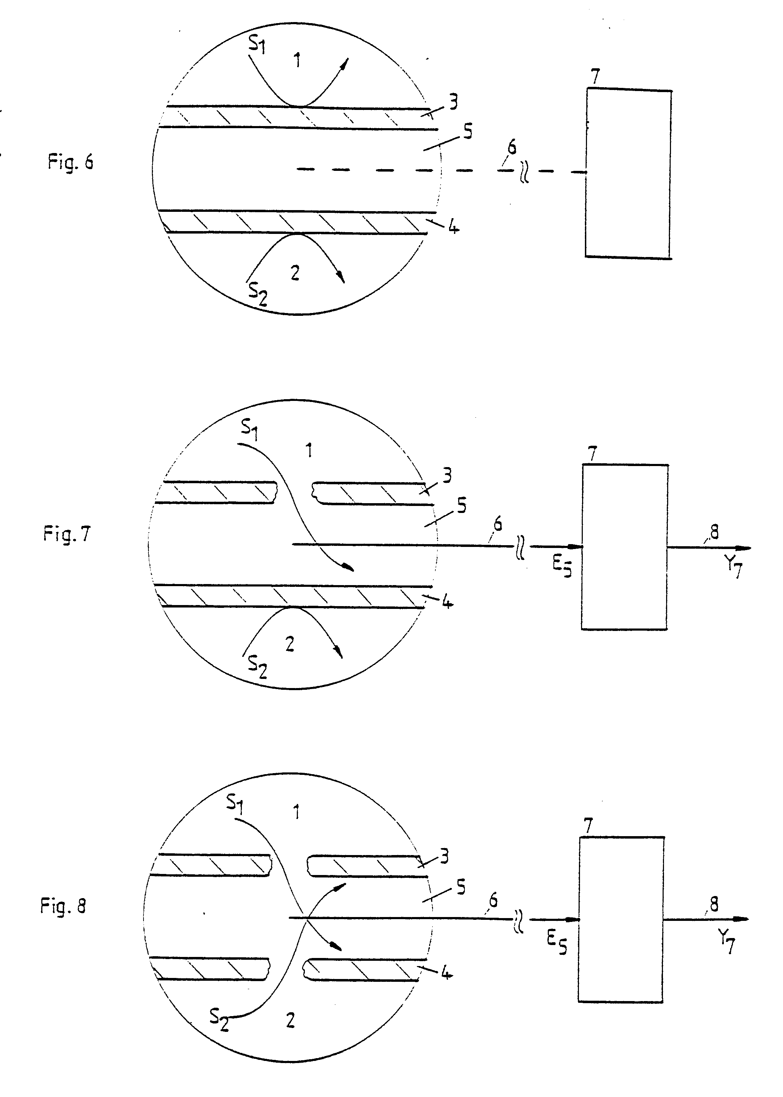

Die Figuren 6 bis 8 zeigen den prinzipiellen Aufbau (Ausschnitt) einer Ausführungsform der erfindungsgemäßen Trennschicht im Querschnitt und erläutern die prinzipielle Funktionsweise der Trennschicht.

Die Trennschicht in Fig. 6 besteht aus zwei festen Materieschichten 3, 4 zur Trennung der Bereiche 1 und 2, die in unbeschädigtem Zustand für die Stoffe $S_1$ und $S_2$ undurchlässig sind.

Die beiden Schichten schließen eine Zwischenschicht 5 ein, die für die Stoffe $S_1$ und $S_2$ zwar durchlässig ist, diese Stoffe aber nicht enthält. Die Zwischenschicht enthält stattdessen einen Energiespeicher, der durch die Stoffe $S_1$ oder $S_2$ aktivierbar ist und der über eine Wirkverbindung 6 mit einer Schutz-und Sicherheitseinrichtung 7 verbunden ist.

Wird eine der beiden äußeren Schichten oder beide Schichten beschädigt, dringen der Stoff $S_1$ (Fig. 7) bzw. die Stoffe $S_1$ und $S_2$ (Fig. 8) in den Zwischenbereich ein und aktivieren den Energiespeicher, der daraufhin die gespeicherte Energie $E_5$ über eine Wirkverbindung 6 an die Schutz-und Sicherheitseinrichtung abgibt und sie aktiviert. Diese gibt über eine Wirkverbindung 8 Ausgangssignale $Y_7$ ab.

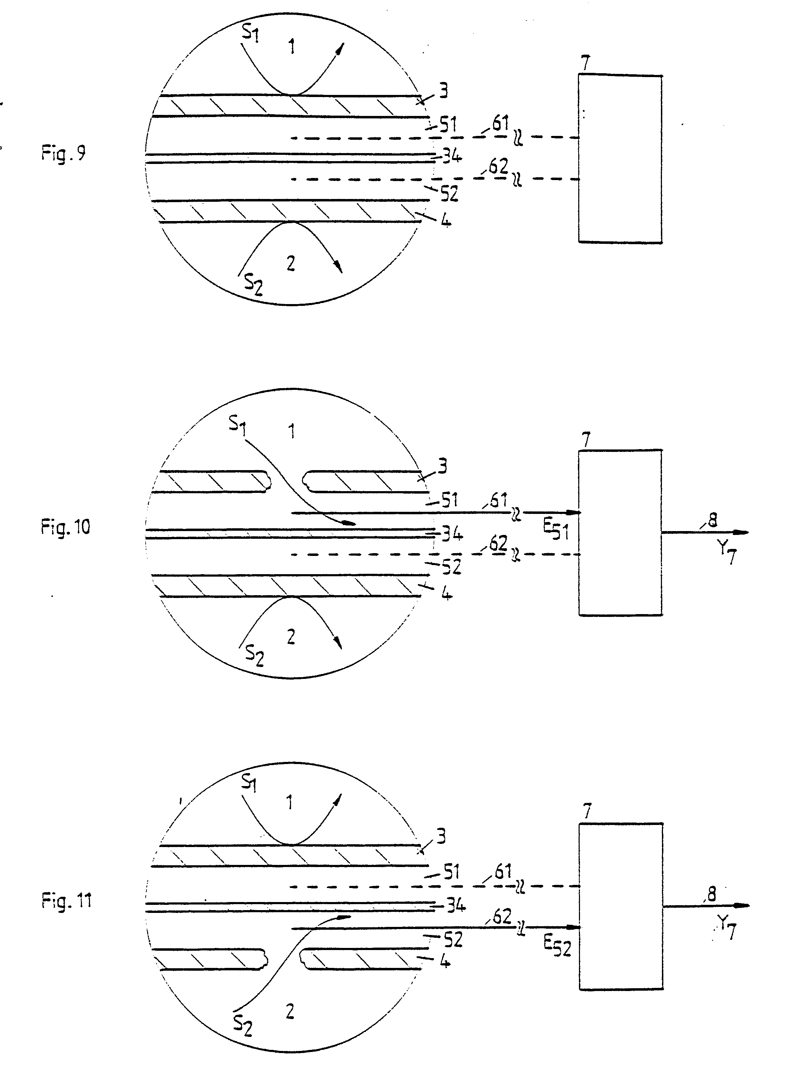

Die Figuren 9 bis 11 zeigen den prinzipiellen Aufbau (Ausschnitt) einer speziellen Ausführungsform der erfindungsgemäßen Trennschicht, die zweckmäßigerweise bei Anwendungen eingesetzt wird, für die keine Energiespeicher existieren, die sowohl durch die Stoffe $S_1$ als auch $S_2$ aktivierbar sind.

Die Trennschicht in Fig. 9 besteht aus den beiden äußeren Trennschichten 3, 4, die zwei Zwischenschichten 51, 52 vollständig einschließen, die ihrerseits durch eine feste Materieschicht 34 voneinander getrennt sind. Der Energiespeicher der Zwischenschicht 51 ist nur durch den Stoff $S_1$ aktivierbar (Fig. 10), der Energiespeicher der Zwischenschicht 52 nur durch den Stoff $S_2$ aktivierbar (Fig. 11).

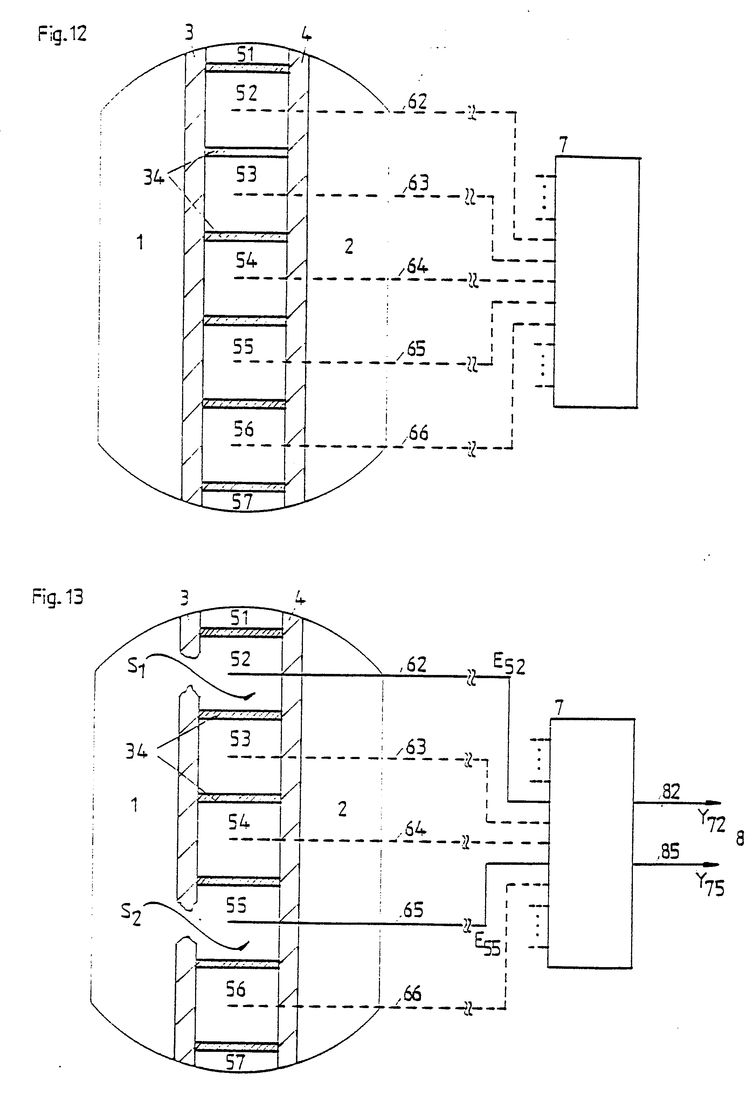

Die Figuren 12 bis 13 zeigen den prinzipiellen Aufbau (Ausschnitt) einer speziellen Ausführungsform der erfindungsgemäßen Trennschicht, bei der beschädigte Stellen insbesondere bei räumlich ausgedehnten Trennschichten, wie zum Beispiel Staumauern, Pipelines etc. leichter ausfindig gemacht werden können.

Die Trennschicht der Fig. 12 enthält mehrere Zwischenschichtzellen 51-57, die durch zusätzliche Trennschichten 34 voneinander getrennt sind und deren Energiespeicher durch getrennte Wirkverbindungen 62 -66 mit der Schutz-und Sicherheitseinrichtung 7 verbunden sind.

Dringt zum Beispiel der Stoff $S_1$ in die Zwischenschichten 52 und 55 ein (Fig. 13), werden die betreffenden Energiespeicher aktiviert und geben ihre gespeicherte Energie $E_{52}$ bzw. $E_{55}$ an die Schutz-und Sicherheitseinrichtung ab, die daraufhin beispielsweise zwei Ausgangssignale $Y_{72}$ bzw. $Y_{75}$ über Wirkverbindungen 82, 85 erzeugt.

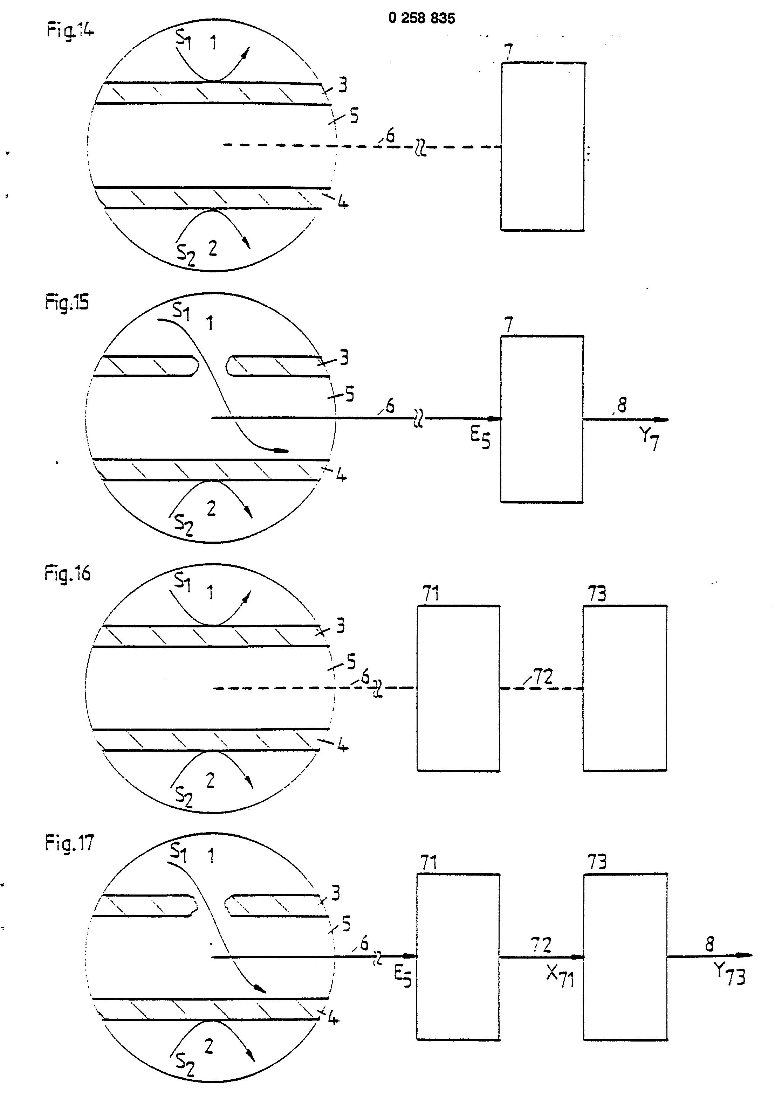

In den Figuren 14 bis 19 werden mögliche Ausführungsformen der Schutz-und Sicherheitseinrichtung und deren Wirkverbindungen mit der Trennschicht gezeigt und die prinzipielle Funktionsweise der Trennschicht erläutert.

Die Trennschicht in Fig. 14 ist über eine Wirkverbindung 6 direkt mit einem Aktor einer Schutz-und Sicherheitseinrichtung 7, zum Beispiel einer Glühlampe, verbunden. Wird die Trennschicht beschädigt, wird die gespeicherte Energie $E_5$ dem Aktor direkt zugeleitet (Fig. 15).

Die Trennschicht in Fig. 16 ist über eine Wirkverbindung 6 mit der Ansteuerung 71 eines Aktors 73, zum Beispiel eines elektromagnetischen Ventils oder eines elektromechanischen Schalters, verbunden. Die Ansteuerung ist über eine zweite Wirkverbindung 72 mit den Aktor verbunden. Wird die Trennschicht beschädigt, wird die gespeicherte Energie $E_5$ der Ansteuerung des Aktors zugeleitet, die daraufhin mit einem Steuersignal $X_{71}$ den Aktor aktiviert (Fig. 17).

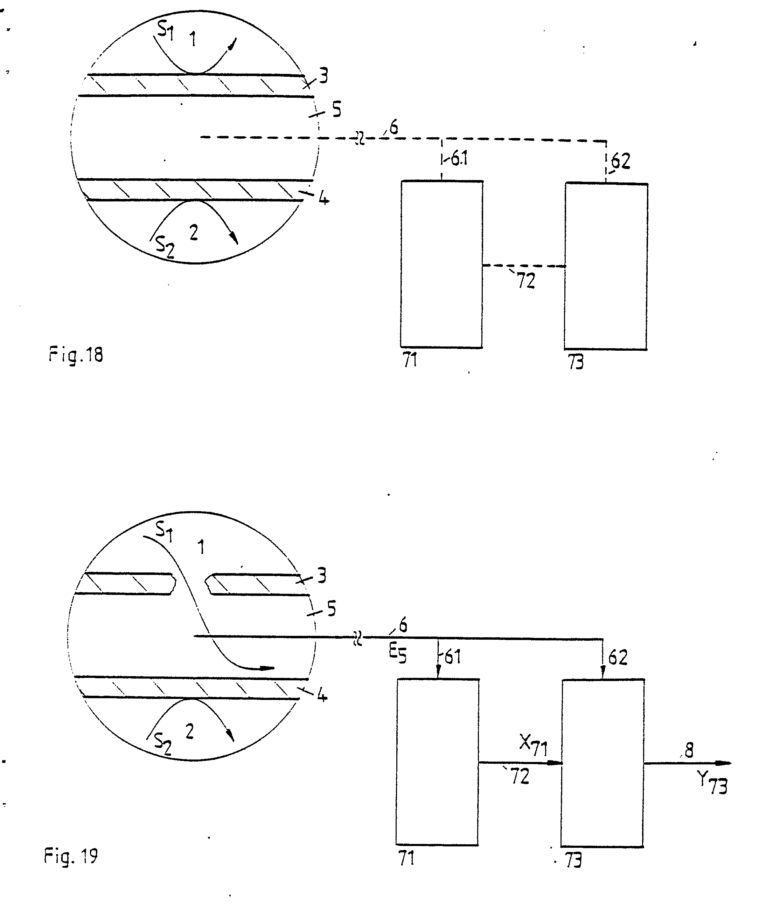

Die Trennschicht in Fig. 18 ist über Wirkverbindungen 6, 61, 62 mit der Ansteuerung 71 eines Aktors 73 und direkt mit dem Aktor 73, zum Beispiel einem Sender, verbunden. Zwischen der Ansteuerung 71 und dem Aktor 73 besteht eine Wirkverbindung 72. Wird die Trennschicht beschädigt, wird die gespeicherte Energie $E_5$ der Ansteuerung des Aktors und dem Aktor zugeleitet. Die Ansteuerung erzeugt daraufhin ein Steuersignal $X_{71}$, mit dem der Aktor aktiviert wird (Fig. 19).

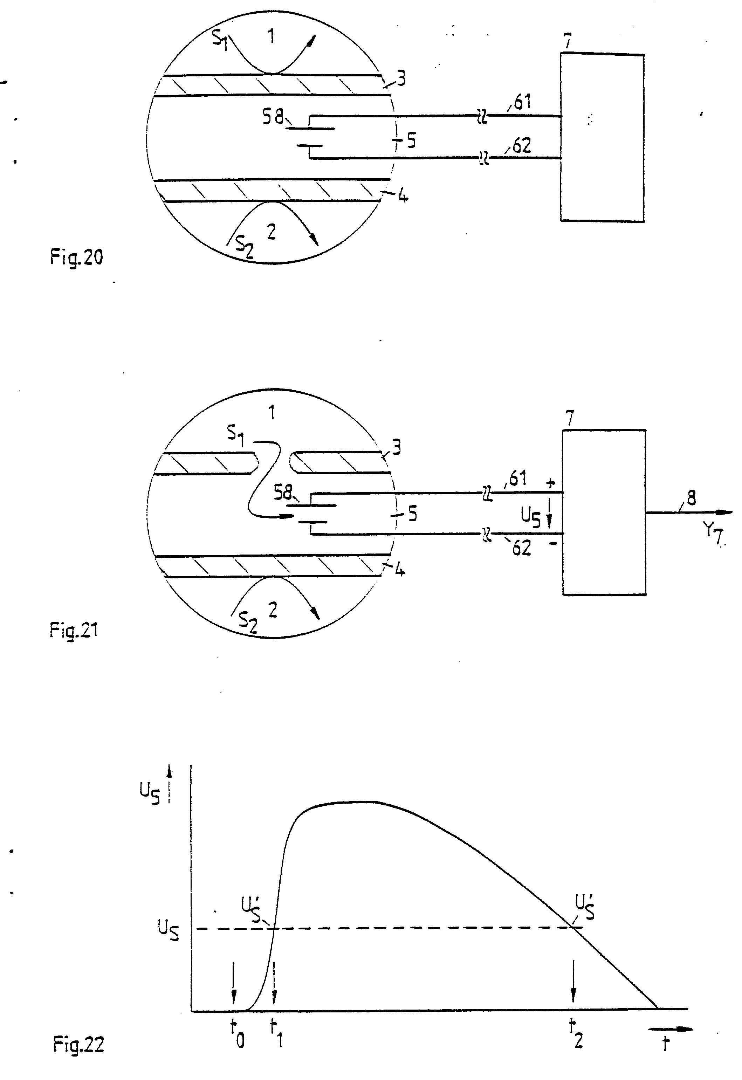

Die Figuren 20 bis 22 zeigen den prinzipiellen Aufbau (Ausschnitt) einer bevorzugten Ausführungsform der erfindungsgemäßen Trennschicht im Querschnitt mit einem galvanischen Füllelement 58 als Energiespeicher, das durch die Stoffe $S_1$ oder $S_2$ aktivierbar ist (Fig. 20), und erläutern die prinzipielle Funktionsweise der Trennschicht.

Wird beispielsweise die Schicht 3 der Trennschicht zum Zeitpunkt $t_0$ beschädigt, dringt der Stoff $S_1$ in die Zwischenschicht 5 ein und aktiviert das Füllelement 58 (Fig. 21), das daraufhin die Schutz-und Sicherheitseinrichtung mit elektrischer Energie $E_5$ versorgt. In Fig. 22 ist qualitativ der zeitliche Verlauf der Ausgangsspannung $U_5$ des Füllelements gezeigt . Übersteigt die Spannung $U_5$ zum Zeitpunkt $t_1$ einen bestimmten Schwellenwert $U_S$, der 0 sein kann, wird die Schutz-und Sicherheitseinrichtung aktiviert, unterschreitet $U_5$ zum Zeitpunkt $t_2$ einen bestimmten anderen Schwellenwert $U_S'$, der gleich $U_S$ sein kann, wird die Schutz-und Sicherheitseinrichtung desaktiviert.

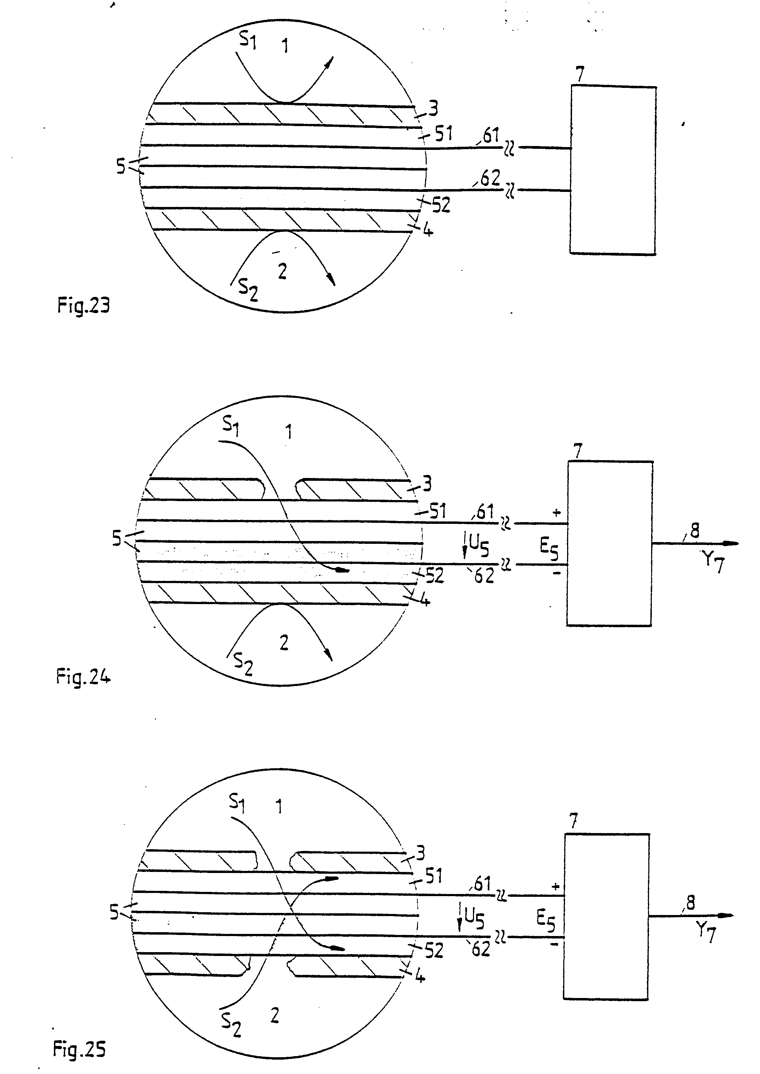

Die Figuren 23 bis 25 zeigen den prinzipiellen Aufbau (Ausschnitt) einer bevorzugten Ausführungsform der erfindungsgemäßen Trennschicht im Querschnitt mit einem $Mg/Na_2S_2O_8$-Füllelement als Energiespeicher, das durch Wasser jeglicher Art aktiviert werden kann, und erläutern die prinzipielle Funktionsweise der Trennschicht.

Die Zwischenschicht 5 der Trennschicht in Fig. 23 besteht aus einer hochporösen elektrisch isolierenden Schicht 51, die die Mg-Elektrode 61, zum Beispiel in Form eines Netzes enthält, und aus einer hochporösen elektrisch leitenden Kohlenstoffilzschicht 52, die den elektrolytischen Reaktanten $Na_2S_2O_8$ in Pulverform bereits enthält und die als Ableitelektrode dient. Zur Erhöhung der Leitfähigkeit kann die Filzschicht 52 zusätzlich feste Kohlenstoffstäbe oder Kupfernetze 62 enthalten. Besteht die Trennschicht 4 aus Metall (z.B. Kupfer), kann diese auch zur Stromableitung benutzt werden. Anstelle des $Mg/Na_2S_2O_8$-Füllelements können auch andere durch Wasser aktivierbare Füllelemente eingesetzt werden.

Werden zum Beispiel eine der beiden äußeren Schichten (Fig. 24) oder beide Schichten (Fig. 25) der Trennschicht beschädigt, aktiviert das eindringende Wasser das Füllelement, das daraufhin seine gespeicherte Energie $E_5$ an die Schutz-und Sicherheitseinrichtung 7 abgibt.

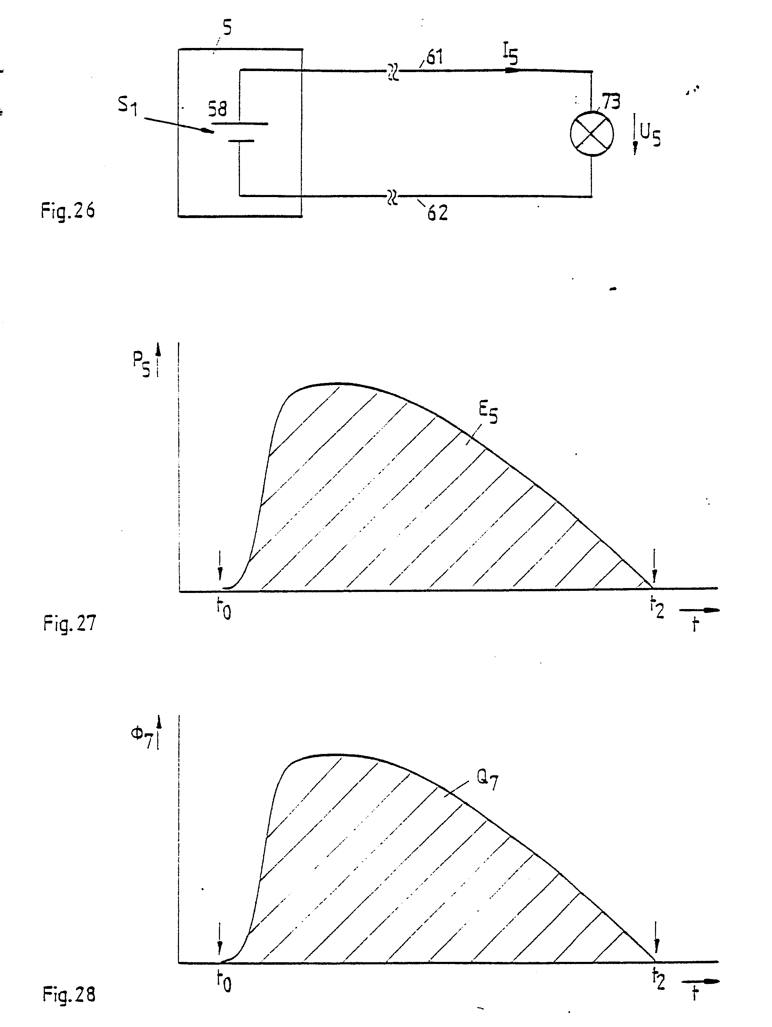

Die Figuren 26 bis 28 zeigen Aufbau und Funktionsweise einer speziellen Ausführungsform der erfindungsgemäßen Trennschicht im Querschnitt mit einem galvanischen Füllelement 58 als Energiespeicher und einer Glühlampe 73 als Aktor (Fig. 26).

Wird die Trennschicht zum Zeitpunkt $t_0$ beschädigt, wird das Füllelement zum Beispiel durch den Stoff $S_1$ aktiviert, das daraufhin die elektrische Leistung $P_5(t)$ an die Glühlampe abgibt. Fig. 27 zeigt qualitativ den zeitlichen Verlauf von $P_5(t)$, Fig. 28 den Verlauf der Strahlungsleistung $\phi_7(t)\sim P_5(t)$ der Glühlampe.

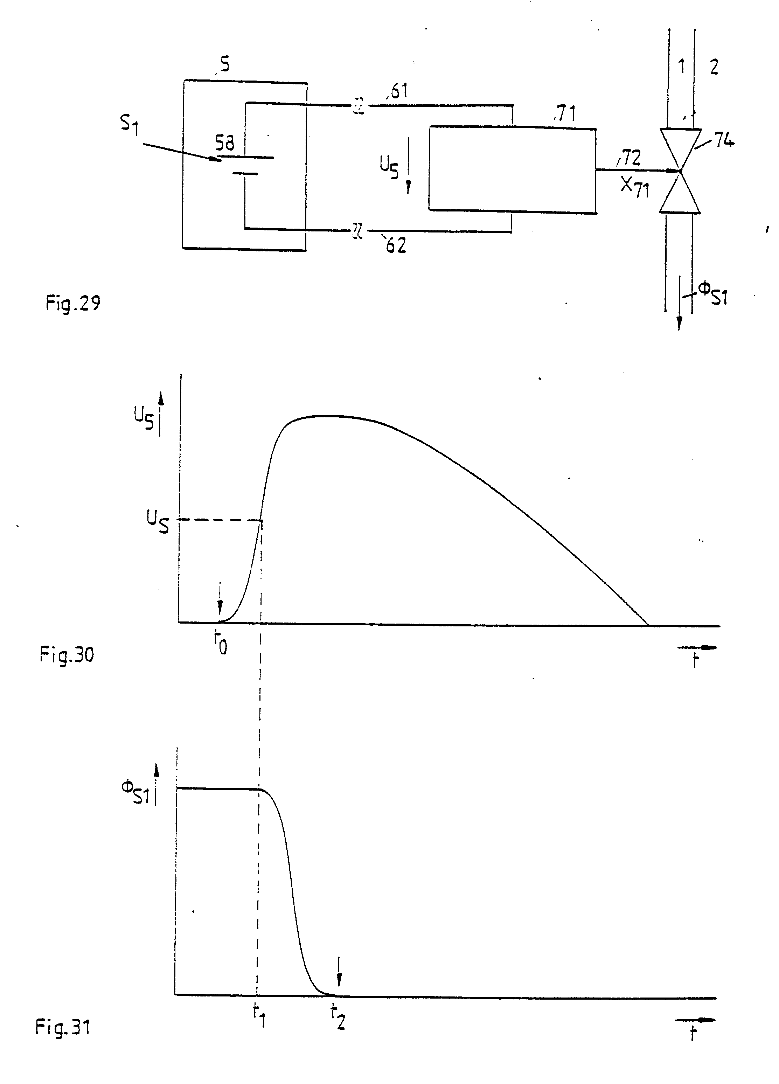

Die Figuren 29 bis 31 zeigen Aufbau und Funktionsweise einer weiteren speziellen Ausführungsform der erfindungsgemäßen Trennschicht im Querschnitt mit einem galvanischen Füllelement 58 als Energiespeicher, das die Ansteuerung 71 eines elektromechanischen Schalters 74 mit elektrischer Energie versorgt, der den Fluß $\phi_{S1}$ von $S_1$ im Bereich 1 kontrolliert (Fig. 29).

Wird die Trennschicht zum Zeitpunkt $t_0$ beschädigt, wird das Füllelement zum Beispiel durch den Stoff $S_1$ aktiviert. Fig. 30 zeit qualitativ den zeitlichen Verlauf der Ausgangsspannung $U_5$ des Füllelements einschließlich eines bestimmten Schwellenwertes $U_S$. Wird zum Zeitpunkt $t_1$ dieser Wert von $U_5$ überschritten, erzeugt die Ansteuerung ein Steuersignal $X_{71}$, das die Schließung des Schalters 74 bewirkt, so daß zum Zeitpunkt $t_2$ der Schalter geschlossen bzw. $\phi_{S1}$ auf 0 abgesunken ist (Fig. 31).

Ein typisches Anwendungsbeispiel ist eine Wasserzuführung für eine Waschmaschine, bei der sich zwischen Schlauch und Wasserhahn ein Ventil befindet, das bei einer Beschädigung des Schlauches automatisch schließt und damit die Wasserzufuhr unterbricht.

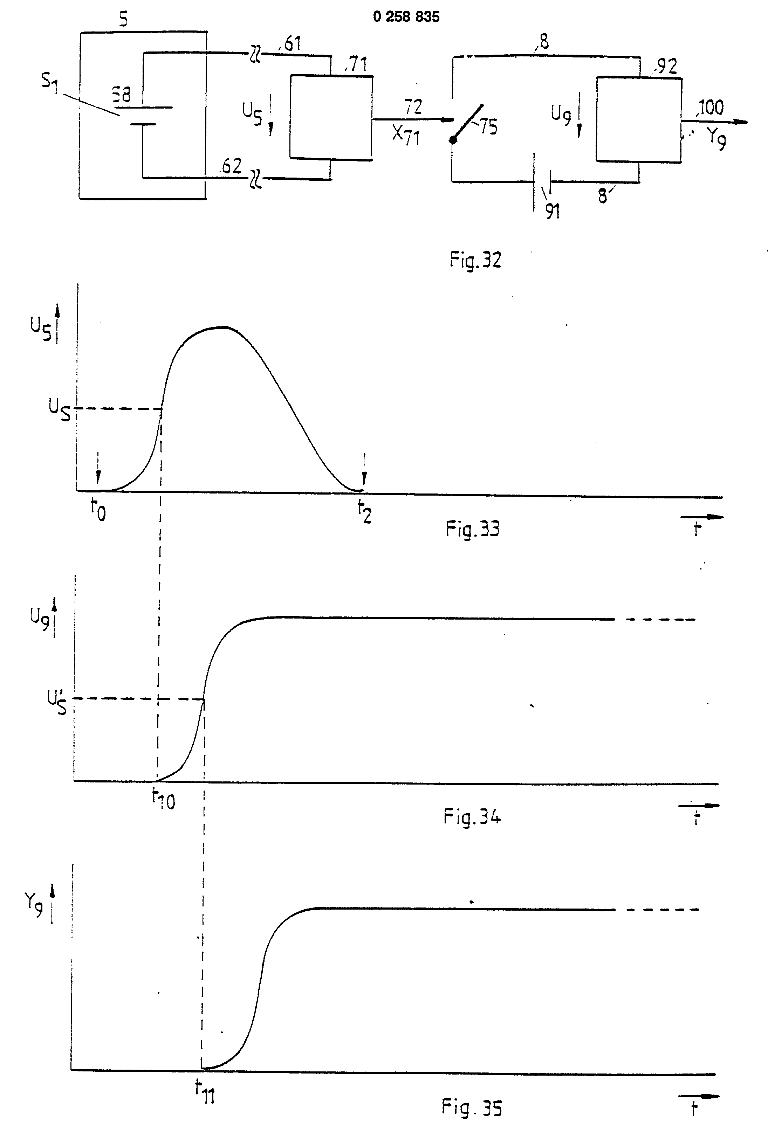

Die Figuren 32 bis 35 zeigen Aufbau und Funktionsweise einer weiteren speziellen Ausführungsform der erfindungsgemäßen Trennschicht mit einem galvanischen Füllelement 58 als Energiespeicher, das die Ansteuerung 71 eines elektromechanischen Schalters 75 mit elektrischer Energie versorgt, der mit einer zusätzlichen unabhängigen Stromversorgung 91 und einem weiteren Aktor 92 einen zweiten Stromkreis 8 bildet (Fig. 32).

Wird die Trennschicht zum Zeitpunkt $t_0$ beschädigt, wird das Füllelement aktiviert und erzeugt die Spannung $U_5$, deren zeitlicher Verlauf qualitativ in Fig. 33 gezeigt ist. Überschreitet $U_5$ zum Zeitpunkt $t_{10}$ einen bestimmten Schwellenwert $U_s$, der auch 0 sein kann, wird der Schalter 75 geschlossen und damit die zusätzliche Stromversorgung 91 an den Aktor 92 angeschlossen. Fig. 34 zeigt qualitativ den zeitlichen Verlauf der Versorgungsspannung $U_9$ des zusätzlichen Aktors. Überschreitet $U_9$ zum Zeitpunkt $t_{11}$ einen bestimmten Schwellenwert $U_{\dot{s}}$ der auch 0 sein kann, wird der Aktor 92 aktiviert und erzeugt das Ausgangssignal $Y_9$ (Fig. 35).

Der Vorteil dieser Ausführungsform besteht darin, daß die Energie $E_5$ der Trennschicht nur dazu benötigt wird, einen elektrischen Stromkreis zu schließen, der zweckmäßigerweise aus einem großen Energiereservoir (zum Beispiel dem Netz) gespeist wird.

Gegenüber den herkömmlichen Trennschichten haben die erfindungsgemäßen Trennschichten folgende Vorteile:

-Bei Beschädigungen der Trennschichten können vorbeugende Reparaturen bzw. Maßnahmen zur Verhütung bzw. Begrenzung von Folgeschäden im allgemeinen rechtzeitig durchgeführt werden.

-Kostenintensive Wartungsarbeiten und Inspektionen können auf ein Minimum beschränkt werden, da der Energiespeicher praktisch wartungsfrei ist und die Schutz-und Sicherheitseinrichtung bei Beschädigungen der Trennschicht automatisch aktiviert wird.

-Beschädigte Stellen an schwer zugänglichen oder räumlich ausgedehnten Trennschichten können leichter ausfindig gemacht werden.

-In vielen Anwendungen können mit galvanischen Füllelementen (lagerfähige Primärzellen oder batterien) als Energiespeicher einfache und billige Trennschichten aufgebaut werden.

**Ansprüche**

1. Undurchlässige Trennschicht zwischen zwei Bereichen mit voneinander getrennt zu haltenden Stoffen, dadurch gekennzeichnet, daß mindestens eine Zwischenschicht vorgesehen ist, in der eine Substanz eingeschlossen ist, die bei Kontakt mit einem der beiden Stoffe Energie freisetzt.

2. Undurchlässige Trennschicht nach Anspruch 1, dadurch gekennzeichnet, daß bei Verwendung zweier Zwischenschichten, die auf jeweils einen der getrennt zu haltenden Stoffe mit Energiefreigabe ansprechen, die Zwischenschichten chemisch und/oder physikalisch voneinander getrennt sind.

3. Undurchlässige Trennschicht nach den Ansprüchen 1 und 2, dadurch gekennzeichnet, daß bei räumlich ausgedehnten Bereichen die Zwischenschichten aus mehreren Zellen bestehen.

4. Undurchlässige Trennschicht nach den Ansprüchen 1 bis 3, dadurch gekennzeichnet, daß die freigesetzte Energie zur Aktivierung von Melde- oder Sicherungseinrichtungen verwendet wird.

5. Undurchlässige Trennschicht nach den Ansprüchen 1 bis 4, dadurch gekennzeichnet, daß die freigesetzte Energie vorzugsweise elektrische Energie ist.

Fig.1

Fig.2

Fig.3

Fig.4

Fig.5

Fig. 6

Fig. 7

Fig. 8

0 258 835

Fig. 9

Fig. 10

Fig. 11

**Fig.12**

3  4

51
52
53
54
55
56
57

34

1  2

62
63
64
65
66

7

**Fig. 13**

3  4

51
S₁  52
34  53
1  54  2
S₂  55
56
57

62  E₅₂
63
64
65
66  E₅₅

7

82  Y₇₂  8
85  Y₇₅

Fig.14

Fig.15

Fig.16

Fig.17

Fig.18

Fig. 19

0 258 835

Fig.20

Fig.21

Fig.22

Fig.23

Fig.24

Fig.25

Fig.26

Fig. 27

Fig.28

Fig.29

Fig.30

Fig.31

Fig.32

Fig.33

Fig.34

Fig. 35